# EUROPÄISCHE PATENTSCHRIFT

(11) **EP 0 710 277 B1**
(45) Veröffentlichungstag und Bekanntmachung des Hinweises auf die Patenterteilung: **03.09.1997**
(21) Anmeldenummer: 95906186.2
(22) Anmeldetag: 17.06.1994
(51) Int. Cl.: C12C 7/17

(54) **VERFAHREN ZUR REGELUNG DES WÜRZEABLUSSES AUS EINEM LÄUTERBOTTICH**
PROCESS FOR CONTROLLING THE WORT FLOW FROM A LAUTER TUB
PROCEDE DE REGULATION DE L'ECOULEMENT DE MOUT HORS D'UNE CUVE DE DECANTATION

(30) Priorität: 19.07.1993 DE 4324157
(43) Veröffentlichungstag der Anmeldung: 08.05.1996
(73) Patentinhaber: ANTON STEINECKER ENTWICKLUNGS GmbH & Co., D-85356 Freising/Attaching (DE)
(72) Erfinder: STIPPLER, Kurt, D-85417 Marzling (DE); WASMUHT, Klaus, D-91792 Ellingen (DE); PRITSCHER, Reinhard, D-84030 Ergolding-Landshut (DE)
(74) Vertreter: Grünecker, Kinkeldey, Stockmair & Schwanhäusser Anwaltssozietät
(86) Internationale Anmeldenummer: EP9401982
(87) Internationale Veröffentlichungsnummer: WO9503394

(56) Entgegenhaltungen:
- EP-A- 0 362 793
- DE-A- 139 480
- DATABASE WPI Section Ch, Week 8608, Derwent Publications Ltd., London, GB; Class D16, AN 86-048759 & DD,A,228 821 (VEB. WISS. TECH. GARUN.) 23. Oktober 1985
- DATABASE WPI Section Ch, Week 8235, Derwent Publications Ltd., London, GB; Class D16, AN 82-74336E & SU,A,879 568 (PISCHEPROMAVTOMATI) 7. November 1981

## Beschreibung

Die Erfindung betrifft ein Verfahren zur Regelung des Würzeabflusses aus einem Läuterbottich.

Ein Verfahren zur Regelung des Würzeabflusses bei der Biererzeugung ist z.B. aus der europäischen Patentanmeldung EP-A-0362 793 bekannt. Bei diesem Verfahren wird die Würzeabflußmenge gemessen und mit einem vorgebbaren Abflußmengenwert verglichen. Dieser Abflußmengenwert dient als Sollwert, die tatsächlich gemessene Würzeabflußmenge als Istwert. In Abhängigkeit von der Differenz zwischen dem Ist- und dem Sollwert wird die im Läuterbottich angeordnete Aufhackmaschine angehoben bzw. abgesenkt. Beim Absinken der Durchflußmenge der Würze wird die Aufhackvorrichtung in eine tiefere Stellung gebracht, um die auf dem Senkboden des Läuterbottichs abgesetzte Treberschicht aufzulockern. Durch die Auflockerung wird der Widerstand der Treberschicht verringert, so daß der Durchfluß der Würze erhöht werden kann. Dadurch läßt sich die insgesamt für das Abläutern der Würze benötigte Zeit verkürzen. Es können auch in verschiedenen Phasen verschiedene Abflußmengenwerte vorgegeben werden, um in den einzelnen Abschnitten (Vorderwürzegewinnung, Nachgüsse) mit entsprechend geeigneten Abflußmengenwerten arbeiten zu können.

Wenngleich mit diesem Verfahren zwar eine Verkürzung der Läuterzeit erreicht werden kann, so bleibt dennoch auch bei diesem Verfahren der Läutervorgang derjenige Vorgang bei der Würzeherstellung, der die längste Zeit erfordert und deshalb im Hinblick auf eine weitere Erhöhung der Sudfolge weiter verkürzt werden sollte, und zwar ohne Beeinträchtigung der Würzequalität. Außerdem ist es wünschenswert, eine individuelle Anpassungsmöglichkeit für die verschiedensten Biertypen, Rohstoffzusammensetzungen, Schrotzusammensetzungen, Maischekonsistenz und Beladungen der Läuterbottiche zu haben.

Es ist daher Aufgabe der Erfindung, bei einem Verfahren der eingangs genannten Art die Zeit für das Abläutern der Würze weiter zu verkürzen, wobei dies unter den verschiedensten Bedingungen, Biertypen, Rohstoffzusammensetzungen usw. ermöglicht werden soll.

Diese Aufgabe wird erfindungsgemäß durch ein Verfahren gelöst, das die Merkmale des charakterisierenden Teiles des Anspruchs 1 aufweist.

Mit der Erfindung wird also in dem gesamten Abläutervorgang, der sich von der Vorderwürzegewinnung bis über die Nachgüsse erstreckt, mindestens einmal eine Phase eingeschaltet, die als Trending bezeichnet werden kann. In dieser Phase wird die Würzeabflußmenge nicht auf einen konstanten Würzeabflußmengenwert geregelt, sondern anhand einer ansteigenden, insbesondere treppenförmigen Abflußmengenkurve, die sich daraus ermitteln läßt, das man durch Vorgabe einer bestimmten erhöhten Abflußmenge, die nach einer bestimmten Zeit erreicht sein soll, die sich hieraus ergebende Steigung für die Durchflußmengenerhöhung pro Zeiteinheit (Sollwert) errechnet.
Die Beeinflussung der Abflaufmenge kann durch Regelung der wirksamen Durchflußöffnung eines Regelventils stattfinden, aber auch durch Regelung über den Öffnungswinkel einer Läuterklappe.

In sehr vorteilhafter Ausgestaltung der Erfindung ist in den Regelkreis zur Regelung der Abflußmenge auch die im Läuterbottich vorhandene Aufhackmaschine entsprechend der EP-A-0326 793 eingeschaltet bzw. kombiniert.

Dies kann vorteilhaft so geschehen, daß dann, wenn eine bestimmte schrittweise Erhöhung des Öffnungswinkels der Läuterklappe um einen bestimmten Winkelbetrag (z.B. 8%) keine entsprechende Erhöhung der Durchflußmenge in der Trendingphase bringt, die Aufhackmaschine etwas abgesenkt wird, um eine Erhöhung der abfließenden Würzemenge zu bewirken.

Diese Trendingphase kann solange durchgeführt werden, bis der zweite, erhöhte Abflußmengenwert erreicht ist, oder aber die Klappenstellung einen ebenfalls vorgebbaren Grenzwert erreicht hat (z.B. 80% Gesamtöffnungswinkel), so daß eine weitere Erhöhung keine nennenswerte Durchflußerhöhung mehr bringt.

Im Verlauf der Trendingphase ist es vorteilhaft, wenn der Sollwert verändert werden kann. Insbesondere wird der Sollwert vermindert, falls eine erhöhte Durchflußmenge der Würze nicht erreicht werden kann, wodurch ein Festziehen oder eine Verfestigung der Treberschicht vermieden wird. Dies hätte einen Tiefschnitt zur Folge, welcher in der Trendingphase nicht erwünscht ist. Sobald sich die Durchflußmenge der Würze über einen gewissen Zeitraum stabilisiert hat, wird die Erhöhung der Durchflußmenge pro Zeiteinheit mit dem ursprünglichen Sollwert fortgesetzt.

Eine Vorrichtung zur Durchführung des Verfahrens sieht bei einem Läuterbottich der gattungsgemäßen Art vor, daß ein Abflußmengenregler zur Regelung der Menge der abfließenden Würze an die Steuerung angeschlossen ist.

Durch diese Maßnahme wird es möglich, das Verfahren durchzuführen, weil der Abflußmengenregler dann in den Regelkreis einbezogen ist und entsprechend den jeweils gewünschten Werten durch die Steuerung selbsttätig beeinflußt werden kann.

Die Erfindung wird nachstehend anhand des in der Zeichnung dargestellten Ausführungsbeispiels näher erläutert. Dabei zeigt:

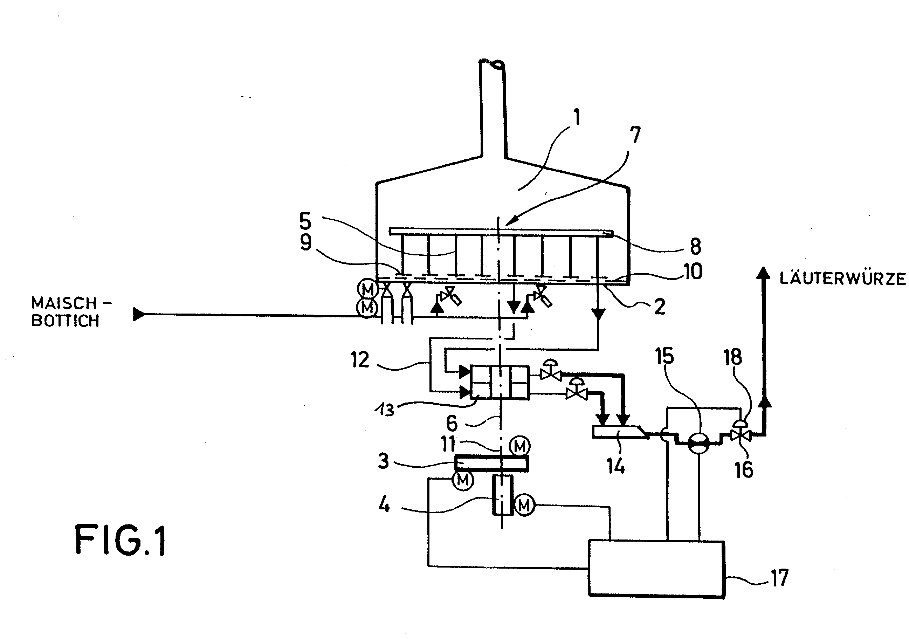

- Figur 1: eine schematische Darstellung einer Vorrichtung zur Durchführung des erfindungsgemäßen Verfahrens und
- Figur 2: schematische Erläuterungsskizze zur Darstellung des erfindungsgemäßen Prinzips und
- Figur 3: ein im Versuch gemessenes aktuelles Ablaufprogramm zur weiteren Erläuterung des erfindungsgemäßen Verfahrens.
- Figur 4: schematische Darstellung des angestrebten und des tatsächlichen Durchflußmengenwertes in Abhängigkeit von der Zeit.

Die Vorrichtung umfaßt einen Läuterbottich 1, der auf einer nicht dargestellten Tragvorrichtung angeordnet sein kann, um unter dem Boden 2 des Läuterbottichs 1 einen Einbauplatz für eine Antriebsvorrichtung 3 sowie für eine Hub- und Senkvorrichtung 4 für die innerhalb des Läuterbottichs 1 angeordnete Aufhackvorrichtung 5 zu schaffen. Die Aufhackvorrichtung 5 weist eine Antriebswelle 6 auf, welche drehbeweglich sowie axial verschieblich gelagert ist. Im oberen Endabschnitt 7 der Antriebswelle 6 sind in Umfangsrichtung in gleichem Abstand voneinander mehrere Horizontalarme 8 befestigt, die jeweils eine Reihe von Aufhackmessern 9 für eine Treberschicht tragen, welche sich beim Läutervorgang als Rückstand auf dem Senkboden 10 des Läuterbottichs 1 absetzt. Die Antriebswelle 6 der Aufhackvorrichtung steht mit ihrem unteren Endabschnitt 11 in Eingriff mit der Antriebseinrichtung 3 sowie mit der Hub- und Senkvorrichtung 4.

Die aus dem Läuterbottich 1 abgezogene Läuterwürze gelangt über einen Abfluß 12 in den Sammeltopf 13 und von diesem in ein Zentralrohr 14, dem ein Durchflußmengenmeßgerät 15 und ein Abflußmengenregler 16 nachgeschaltet sind. Mit dem Durchflußmengenmeßgerät 15 kann der Durchfluß der Läuterwürze gemessen werden.

Das Durchflußmeßgerät 15 ist an die Steuerungseinrichtung 17 angeschlossen, die ihrerseits mit einem Stellglied 18 des Abflußmengenreglers 16 sowie mit der Antriebsvorrichtung 3 von der Hub- und Senkvorrichtung 4 der Aufhackvorrichtung 5 verbunden ist.

Die Antriebsmotoren für die Hub- und Senkvorrichtung sowie für die Drehbewegung der Aufhackvorrichtung sind mit M dargestellt.

Mit dieser Vorrichtung kann das erfindungsgemäße Verfahren nun wie folgt durchgeführt werden:

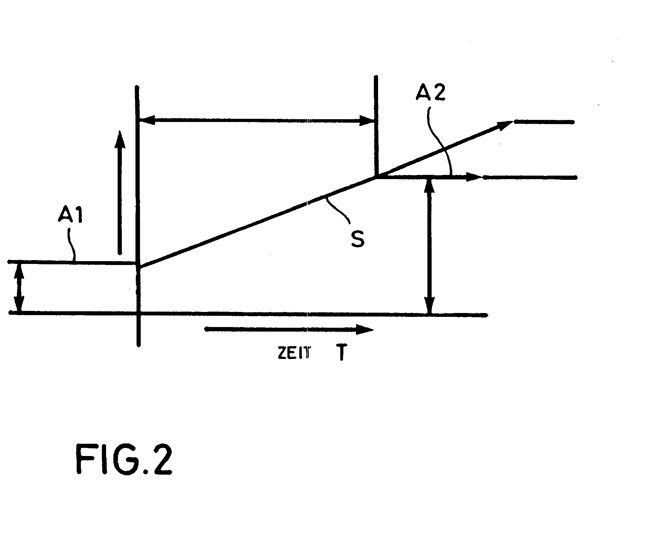

Zu Beginn der Abläuterung wird die Ausgangshöhe der Aufhackmaschine, der Durchfluß und der Öffnungswinkel der Abläuterklappe festgelegt. Der Durchflußmengenwert hängt von der Zusammensetzung der Schüttung, von der Biersorte, vom verwendeten Rohmaterial und dergl. mehr ab. Es wird dann nach Erfahrungswerten ein geeigneter Durchflußmengenwert festgelegt und entsprechend der Öffnungswinkel der Abläuterklappe eingestellt. Bis zu einer bestimmten einstellbaren Gesamtläutermenge oder einer bestimmten einstellbaren Läuterzeit werden diese Werte beibehalten und ggf. die Aufhackmaschine eingesetzt, um die gewünschte Durchflußmenge beizubehalten. Dieser Wert, auf den zunächst die Durchflußmenge eingestellt wird, ist in der Figur 2 mit A1 bezeichnet und stellt den ersten Abflußmengenwert dar. Dieser Wert kann z.B. 300 oder 350 hl/h oder ein entsprechender prozentualer Durchflußmengenwert sein.

Wenn nun erfindungsgemäß die Trendingphase eingeleitet wird, wird in die Steuerung 17 ein zweiter, wesentlich erhöhter Durchflußmengenwert oder ein entsprechend erhöhter prozentualer Durchflußmengenwert A2 eingegeben und es wird der Steuerung mitgeteilt, in welcher Zeit T dieser deutlich erhöhte Abflußmengenwert A2 erreicht sein soll. Die Steuerung kann sich dann die Steigung S errechnen. Diese durch die Steigung S repräsentierte Erhöhung der Durchflußmenge pro Zeiteinheit wird dann als Sollwert während der Trendingphase der Steuerung des Abflußmengenreglers vorgegeben.

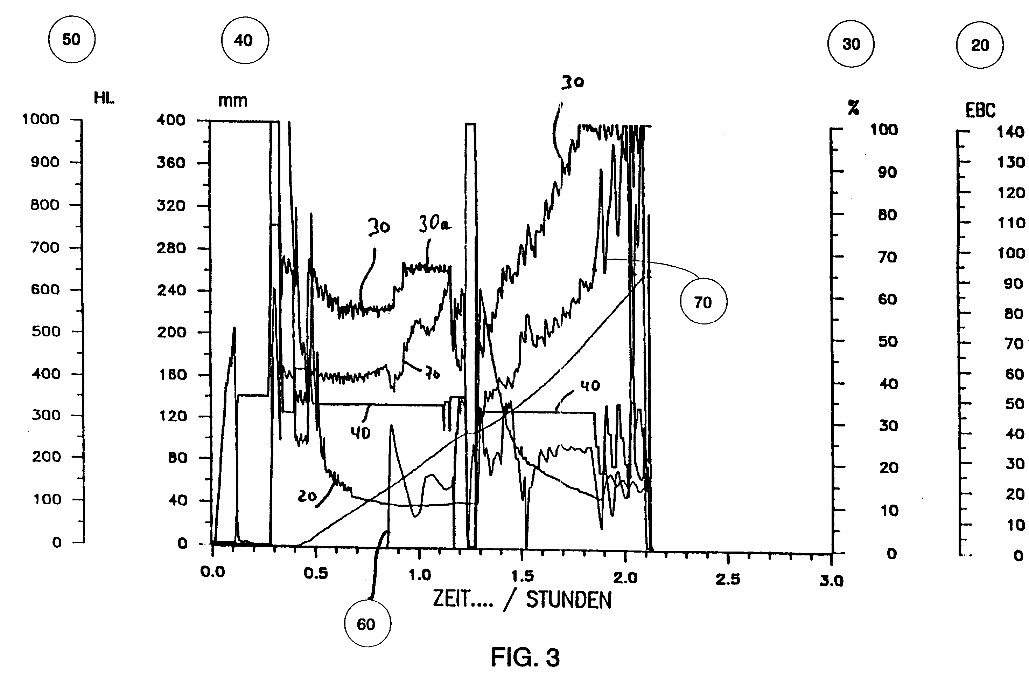

In der Figur 3 ist nun ein aktuell gemessenes Diagramm dargestellt, das einen gesamten Abläuterungsvorgang im zeitlichen Ablauf und im Zusammenspiel der einzelnen Parameter erkennenläßt.

Das Bezugszeichen 20 bezeichnet dabei den Verlauf der Trübung, das Bezugszeichen 30 den Durchfluß in %, das Bezugszeichen 40 den Hub der Aufhackmaschine in mm, das Bezugszeichen 50 den Gesamtdurchfluß in hl, das Bezugszeichen 60 den herrschenden Überdruck im Läuterbottich und schließlich das Bezugszeichen 70 den Öffnungswinkel des Regelventils 16.

In der linken Hälfte des dargestellten Diagramms kann man ohne weiteres erkennen, daß bis zum Zeitpunkt von ca. 1,2 Stunden die Steuerung bzw. Regelung der Ablaufmenge insbesondere bei der Vorderwürzegewinnung im wesentlichen nach zwei unterschiedlichen Sollwerten vorgenommen wird. Den einen Durchflußmengensollwert stellt die Linie dar, in der das Bezugszeichen 30 in der Durchflußmengenkurve (prozentual) endet, während das Trending mit dem Steigungswert für die Durchflußmenge pro Zeiteinheit als Sollwert rechts neben der Tiefschnittkurve (Spitze bei 1,25 Std. in Fig. 3) zu sehen ist. Eine Durchflußmengenerhöhung 30a geht mit der Einspeisung von CO2 in den Läuterbottich einher. Mit der Abnahme des CO2-Gehaltes wird der Öffnungswinkel des Regelventils 16 weiter erhöht, um den Durchflußmengensollwert konstant halten zu können. Nach Erreichen einer gewissen Winkelstellung wird nicht mehr durch eine weitere Öffnung des Winkels des Regelventils der Sollwert beibehalten, sondern es setzt zusätzlich das Absenken der Aufhackmaschine ein, wie man an der Aufhackmaschinenhubhöhenkurve 40 sehen kann. Wenn nun die Durchflußmenge trotzdem weiter abfällt, wird ein erster Tiefschnitt durchgeführt und es wird die Trendingphase danach eingeleitet. Hierzu wird der Steuerung 17 ein stark erhöhter Durchflußmengensollwert vorgegeben, der in einer bestimmten Zeit, z.B. nach insgesamt 30 Minuten ab Beginn der Trendingphase erreicht werden soll. Damit die Istwertkurve 30 der Durchflußmenge diesem errechneten Anstieg folgen kann, erhöht sich der Öffnungswinkel des Regelventils 16 stufenweise, wie das die Kurve 70 zeigt. Wie am rechten Bereich des Spektrums zu erkennen ist, ergibt sich dann nach einer gewissen Zeit eine Situation, in der eine deutliche Vergrößerung des Öffnungswinkels (s. die beiden Spitzen in der Kurve 70 im rechten Randbereich des Spektrums) keine Durchflußsteigerung, wie gewünscht, mehr mit sich bringen (s. rechte obere Ecke des Diagramms, in dem die Durchflußkurve nach unten geht, obwohl die Öffnungswinkelkurve starke Spitzen zeigt. In dieser Situation wird nun die Aufhackmaschine (s. Kurve 40) etwas abgesenkt und trägt mit zur Steigerung der Durchflußmenge bei. Wenn schließlich entweder der Öffnungswinkel des Abflußmengenreglers einen maximalen Wert, z.B. 80% seines Gesamtöffnungswinkels erreicht hat oder aber der obere Abflußmengenwert erreicht ist, endet die Trendingphase.

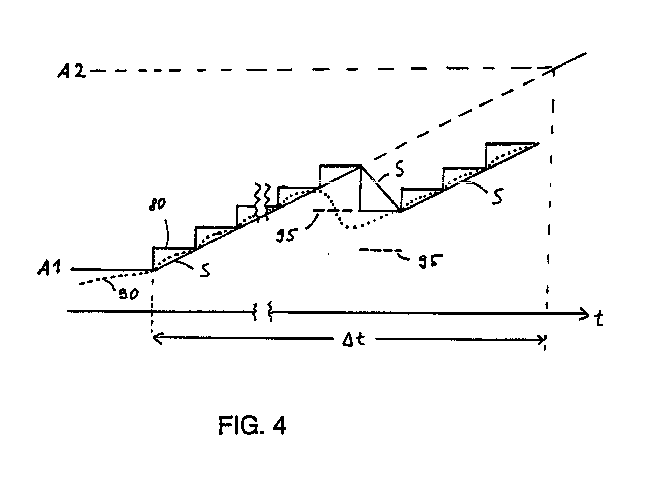

Falls im Verlauf der Trendingphase die gewünschte Durchflußmengensteigerung nicht mehr erreicht wird, so kann gleichzeitig mit dem Absenken der Aufhackmaschine und dem dadurch erreichten Auflockern der Treberschicht eine Verringerung des Sollwertes, also eine Verringerung der Durchflußmenge pro Zeiteinheit, erfolgen. Diese Situation ist in Figur 4 dargestellt. Die Abläuterung der Würze soll beispielsweise mit einem Abflußmengenwert von 200 hl beginnen. Dieser Wert stellt den ersten Abflußmengenwert A1 dar und wird beispielsweise für die Dauer von 5 Minuten fixiert. Danach setzt die Trendingphase ein. Ein erhöhter zweiter Abflußmengenwert A2 von beispielsweise 560 hl wird vorgegeben. Dieser zweite erhöhte Abflußmengenwert soll innerhalb einer Stunde erreicht werden. Durch Vorgabe dieses Zeitwertes an die Steuerung errechnet diese eine Steigung (S) der Durchflußmenge pro Zeiteinheit von 360 hl pro Stunde oder 2 hl pro 20 Sekunden. Ausgehend von dem ersten Abflußmengenwert A1 wird nun in einer Art Treppenfunktion dieser Wert um jeweils 2 hl pro 20 Sekunden erhöht. Der nun angestrebte Durchflußmengenwert 80 nach den ersten 20 Sekunden beträgt 202 hl. Durch einen Vergleich dieses angestrebten Wertes mit dem tatsächlich gemessenen Istwert 90 wird festgestellt, ob der gewünschte Wert in dem dafür angegebenen Zeitraum erreicht worden ist. Ist dies der Fall, dann wird der momentane Durchflußmengenwert von 202 hl wiederum um 2 hl auf 204 hl erhöht. Wiederum wird nach einer Zeit von 20 Sekunden verglichen, ob der neue angestrebte Durchflußmengenwert von 204 hl mit dem tatsächlichen Istwert übereinstimmt. Dieser Vorgang wiederholt sich so lange, bis der zweite Durchflußmengenwert A2 von 560 hl erreicht ist. Aufgrund des vorgegebenen Sollwertes (S) bzw. der Steigung von 360 hl pro Stunde oder 2 hl pro 20 Sekunden sollte dies nach einer Stunde der Fall sein.

In der Steuerung 17 wird zusätzlich zu dem jeweils angestrebten Durchflußmengenwert 80 ein unterer Grenzwert 95 für die tatsächliche Durchflußmenge 90 errechnet, welcher beispielsweise 4 hl unterhalb des jeweils angestrebten Durchflußmengenwertes 80 liegt. Wird im Verlauf der Trendingphase der angestrebte Durchflußmengenwert 80 nicht erreicht, sondern sinkt vielmehr der tatsächliche Istwert 90 für die Durchflußmenge unterhalb des Grenzwertes 95 für die Durchflußmenge, dann wird der Sollwert (s) um einen vorbestimmten Betrag verringert. Beispielsweise kann der Sollwert von bisher 2 hl pro 20 Sekunden auf minus 4 hl pro 20 Sekunden abgesenkt werden. Dies bedeutet, daß bei einem angestrebten Durchflußmengenwert von beispielsweise 380 hl nach 30 minütiger Laufzeit der Trendingphase dieser Wert durch die Verringerung des Sollwertes auf 376 hl vermindert wird. Von diesem neu angestrebten Durchflußmengenwert 80 wird nun wiederum ein um den gleichen Betrag von 4 hl pro 20 Sekunden verringerter neuer unterer Grenzwert von 372 hl errechnet. Wird innerhalb des nächsten Zeitintervalls von 20 Sekunden auch dieser neue Grenzwert von 372 hl unterschritten, so wiederholt sich der vorstehende Ablauf so lange, bis ein unterer Grenzwert für die Durchflußmenge nicht mehr unterschritten wird. Die Steuerung 17 führt gleichzeitig mit dem Unterschreiten des ersten unteren Grenzwertes ein Absenken der Aufhackmaschine aus, wodurch die Treberschicht aufgelockert und die Durchflußmenge erhöht wird. Falls kein weiteres Absinken der Durchflußmenge stattfindet und damit auch kein Unterschreiten eines weiteren Grenzwertes möglich ist, wird der momentan angestrebte Durchflußmengenwert 80 so lange beibehalten, bis die Durchflußmenge über einen vorbestimmten Zeitraum konstant bleibt oder wieder ansteigt. Sobald dies der Fall ist, wird die Trendingphase mit dem ursprünglichen Steigungswert oder Sollwert (s) von 2 hl pro 20 Sekunden für die Erhöhung der Durchflußmenge pro Zeiteinheit fortgesetzt, d.h., ein angestrebter Durchflußmengenwert von 376 hl wird wieder um 2 hl pro 20 Sekunden auf 378 hl erhöht.

Durch die Verminderung des Sollwertes und des damit verbundene Absenkens der Durchflußmenge wird vermieden, daß sich die Treberschicht aufgrund eines Saugeffektes festzieht, was ansonsten bei einer zunehmenden Öffnung des Regelventils 16, um eine erhöhte Durchflußmenge zu erzielen, der Fall wäre. Die derart verfestigte Treberschicht hätte dann nur mittels eines Tiefschnittes wieder gelockert werden können, was nicht erwünscht ist.

Wie das Diagramm gemäß Fig. 3 auch erkennen läßt, ist es mit dem erfindungsgemäßen Verfahren bei dem dargestellten Ausführungsbeispiel möglich, eine Gesamtläutermenge von ca. 650 hl in einer Zeit von ca. 100 Minuten abzuläutern, während man hierzu bei dem in der EP-A-0362 793 beschriebenen Verfahren für eine ähnliche Menge noch 150 bis 165 Minuten ansetzen muß. Das erfindungsgemäße Verfahren bringt damit ganz bedeutende Vorteile hinsichtlich der Verkürzung der Gesamtabläuterzeit. Außerdem kann durch das Durchführen der Trendingphase und unter Berücksichtigung der jeweils gegebenen Bedingungen durch Einstellung unterschiedlicher zweiter Abflußmengenwerte (oberer Durchflußwert) eine individuelle Anpassung an die unterschiedlichsten Gegebenheiten stattfinden, so daß die Verkürzung der Abläuterzeit bei unterschiedlichsten Voraussetzungen möglich ist.

## Patentansprüche

1. Verfahren zur Regelung des Würzeabflusses aus einem Läuterbottich insbesondere bei der Bierherstellung, bei dem die Würzeabflußmenge gemessen und mit wenigstens einem vorgebbaren Abflußmengenwert verglichen und entsprechend der Differenz zwischen Soll- und Istwert eine Erhöhung bzw. Erniedrigung der Abflußmenge geregelt wird, **dadurch gekennzeichnet,** daß im Verlauf eines gesamten Abläutervorgangs (Vorderwürze, Nachgüsse) in wenigstens einer Phase (Trendingphase) ausgehend von dem vorgegebenen Abflußmengenwert des Würzeabflusses ein zweiter, erhöhter Abflußmengenwert vorgegeben wird, der in einem bestimmten Zeitintervall erreicht sein soll, daß aus diesen Werten die zum Erreichen des zweiten Abflußmengenwertes notwendige Erhöhung der Durchflußmenge pro Zeiteinheit (Steigungswert) ermittelt wird und daß dieser ermittelte Steigungswert als Sollwert zur Regelung eines Abflußmengenreglers verwendet wird.

2. Verfahren nach Anspruch 1, **dadurch gekennzeichnet,** daß zur Regelung der Abflußmenge die wirksame Durchflußöffnung eines Regelventils beeinflußt wird.

3. Verfahren nach Anspruch 1, **dadurch gekennzeichnet,** daß zur Regelung der Abflußmenge der Öffnungswinkel einer Läuterklappe verändert wird.

4. Verfahren nach einem der vorangegangenen Ansprüche, **dadurch gekennzeichnet,**
daß in den Regelkreis zur Regelung der Abflußmenge auch eine im Läuterbottich vorhandene Aufhackmaschine einbezogen ist.

5. Verfahren nach einem der vorangegangenen Ansprüche, **dadurch gekennzeichnet**, daß der Sollwert im Verlauf der Trendingphase verändert wird.

6. Verfahren nach Anspruch 5, **dadurch gekennzeichnet**, daß der Sollwert verringert wird, falls eine erhöhte Durchflußmenge der Würze im Verlauf der Trendingphase nicht erreicht wird.

7. Verfahren nach Anspruch 5, **dadurch gekennzeichnet,** daß der Sollwert negativ ist.

8. Verfahren nach Anspruch 7, **dadurch gekennzeichnet,** daß nach Verringerung des Sollwertes der ursprüngliche Sollwert wieder eingestellt wird, falls die Durchflußmenge der Würze über eine vorbestimmte Zeit konstant ist.

## Claims

1. A method for controlling the wort outflow from a lauter tun, in particular during brewing, wherein the wort outflow quantity is measured and compared with at least one predeterminable outflow value and an increase or decrease in the outflow quantity is regulated in accordance with the difference between set value and actual value,
**characterized in** that in the course of a complete lautering process (first wort, second worts) a second increased outflow value which is to be reached within a specific time interval is predetermined in at least one phase (trending phase), based on the predetermined outflow value of the wort outflow, that the increase in flow rate per time unit (increase value) as required for achieving the second outflow value is determined on the basis of these values, and that said determined increase value is used as a set value for controlling an outflow regulator.

2. The method according to claim 1, **characterized in** that the effective flow opening of a regulating valve is varied for regulating the outflow quantity.

3. The method according to claim 1, **characterized in** that the opening angle of a lauter flap is varied for regulating the outflow quantity.

4. The method according to any of the preceding claims, **characterized in** that a raking machine which is provided in said lauter tun is included in the control loop for controlling the outflow quantity.

5. The method according to any of the preceding claims, **characterized in** that the set value is varied in the course of the trending phase.

6. The method according to claim 5, **characterized in** that the set value is reduced if an increased flow rate of the wort is not reached in the course of the trending phase.

7. The method according to claim 5, **characterized in** that the set value is negative.

8. The method according to claim 7, **characterized in that**, after the set value has been reduced, the original set value is again set if the flow rate of the wort is constant over a predetermined period of time.

## Revendications

1. Procédé pour le réglage de l'écoulement du moût provenant d'une cuve de clarification, en particulier dans la fabrication de la bière, dans lequel on mesure le débit du moût et on le compare à au moins une valeur de débit préréglable, et en se référant à la différence entre la valeur de consigne et la valeur effective, on règle une augmentation, respectivement une diminution du débit, caractérisé en ce que, au cours d'un processus global de clarification (premier moût, moûts seconds) dans au moins une phase (phase d'orientation ou de "trending"), à partir de la valeur de débit du moût préréglée, on règle au préalable une seconde valeur de débit supérieure qui doit être atteinte dans un intervalle de temps déterminé, en ce qu'on calcule à partir de ces valeurs l'augmentation du débit par unité de temps (valeur de pente) requise pour atteindre la seconde valeur de débit et en ce qu'on utilise cette valeur de pente calculée comme valeur de consigne pour la commande d'un régulateur du débit.

2. Procédé selon la revendication 1, caractérisé en ce que, pour le réglage du débit, on influence l'ouverture de passage effective d'une soupape de réglage.

3. Procédé selon la revendication 1, caractérisé en ce que, pour le réglage du débit, on modifie l'angle d'ouverture d'un clapet de la cuve de clarification.

4. Procédé selon l'une quelconque des revendications précédentes, caractérisé en ce qu'on intègre également dans le circuit de réglage, pour le réglage du débit, une hacheuse présente dans la cuve de clarification.

5. Procédé selon l'une quelconque des revendications précédentes, caractérisé en ce qu'on modifie la valeur de consigne au cours de la phase d'orientation.

6. Procédé selon la revendication 5, caractérisé en ce qu'on diminue la valeur de consigne au cas où l'on n'atteindrait pas un débit supérieur du moût au cours de la phase d'orientation.

7. Procédé selon la revendication 5, caractérisé en ce que la valeur de consigne est négative.

8. Procédé selon la revendication 7, caractérisé en ce que, après la diminution de la valeur de consigne, on règle à nouveau la valeur de consigne initiale au cas où le débit du moût serait constant pendant un laps de temps prédéterminé.
